# EUROPÄISCHE PATENTSCHRIFT

(11) **EP 2 681 058 B1**
(45) Veröffentlichungstag und Bekanntmachung des Hinweises auf die Patenterteilung: **21.05.2014**
(21) Anmeldenummer: 12700460.4
(22) Anmeldetag: 04.01.2012
(51) Int. Cl.: B60B 17/00

(54) **SCHIENENFAHRZEUGRAD UND SCHIENENFAHRZEUG**
RAIL VEHICLE WHEEL AND RAIL VEHICLE
ROUE DE VÉHICULE SUR RAILS ET VÉHICULE SUR RAILS

(30) Priorität: 04.03.2011 DE 102011013081
(43) Veröffentlichungstag der Anmeldung: 08.01.2014
(73) Patentinhaber: Bombardier Transportation GmbH, 10785 Berlin (DE)
(72) Erfinder: PFETZING, Andreas, 63755 Alzenau (DE); HAAS, Jan-Philipp, 34131 Kassel (DE); RÜGER, Andreas, 34119 Kassel (DE); HOFMANN, Tim-Manuel, 36151 Burghaun (DE)
(74) Vertreter: Cohausz & Florack
(86) Internationale Anmeldenummer: PCT/EP2012/050083
(87) Internationale Veröffentlichungsnummer: WO 2012/119794

(56) Entgegenhaltungen:
- EP-A2- 0 809 037
- WO-A1-2009/086900
- DE-B1- 2 936 668
- DE-U1- 29 604 157

## Beschreibung

Die Erfindung betrifft ein Schienenfahrzeugrad, insbesondere Lokrad, mit einem eine Lauffläche und einen Spurkranz aufweisenden Radkranz, mit einer Radnabe und mit einem den Radkranz mit der Radnabe verbindenden Radsteg, wobei der Radsteg benachbart zum Radkranz eine Querschnittsreduzierung aufweist, die von mindestens einem um die Rotationsachse des Schienenfahrzeugrades umlaufenden ersten Einstich gebildet wird. Ein solches Rad ist aus Dokument WO 2009/086900 A1 bekannt. Ferner betrifft die Erfindung ein Schienenfahrzeug mit einem solchen Schienenfahrzeugrad.

Schienenfahrzeugräder sind Teil des Radsatzes eines Schienenfahrzeugs, beispielsweise einer Lokomotive, eines Triebwagens oder eines Reisezugwagens, und werden mit dem Schienenfahrzeug über die Radachse verbunden. Schienenfahrzeugräder können unterschiedliche Bauformen haben, weisen dabei immer eine Radnabe, einen Radkranz und einen die Radnabe mit dem Radkranz verbindenden Radsteg auf. Der Radsteg ist bei modernen Schienenfahrzeugen als Scheibe ausgebildet, wobei dieser scheibenförmige Radsteg mit dem Radkranz entweder einstückig ausgebildet ist (sogenanntes Vollrad oder Monobloc-Rad) oder Radsteg und Radkranz von separaten Bauteilen gebildet werden, dem sogenannten Radkörper und dem damit zu verbindenden Radreifen.

Bei einem Vollrad ist üblicherweise im Übergangsbereich vom Radsteg zum Radkranz sowohl auf der Radaußenseite als auch der Radinnenseite ein umlaufender Einstich, das heißt eine umlaufende Vertiefung, vorgesehen. Die Einstiche bilden einen Hinterschnitt, der bewirken soll, dass sich die benachbarte Radbremsscheibe ungehindert ausdehnen kann, wenn sich dies beim Bremsvorgang erwärmt.

Beispielsweise ist von einem internen Stand der Technik ein Vollrad bekannt, bei welchem die beiden gegenüberliegenden Einstiche so ausgebildet sind, dass das Verhältnis der Dicke des nabenseitig zu den Einstichen benachbarten Abschnitts des Radsteges zur Dicke des Abschnitts des Radsteges, in dem die Querschnittsreduzierung maximal ist, der Radsteg also am dünnsten ist, etwa 1,3 oder mehr beträgt. Mit anderen Worten erfolgt im Bereich der Querschnittsreduzierung eine Verringerung der Dicke gegenüber dem benachbarten Abschnitt des Radsteges um 30% oder mehr. Dabei beträgt die Steigung der Kurventangenten gegenüber der Stegoberfläche im Bereich des nabenseitigen Endes des jeweiligen Einstichs 40% oder mehr. Mit anderen Worten fällt die Oberfläche des Radsteges in Richtung von der Nabe zum Radkranz am nabenseitigen Ende des Einstichs relativ stark ab, so dass in diesem Bereich zwischen Einstich und nabenseitig benachbartem Abschnitt des Radsteges eine relativ stark ausgeprägte Kante und durch den Einstich eine große Vertiefung gebildet wird.

Für eine möglichst ungehinderte Ausdehnung der Radbremsscheiben in diesem Bereich mag dies von Vorteil sein. Weil naturgemäß durch das Gewicht des Schienenfahrzeugs eine hohe radiale Belastung der Räder erfolgt, ist jedoch bei den aus dem Stand der Technik bekannten Vollrädern problematisch, dass die zulässige Radsatzlast, das heißt der Anteil der Gesamtmasse, der auf einen Radsatz dieses Fahrzeugs entfällt, durch die Einstiche und die dadurch gebildete Querschnittsreduzierung relativ gering ist.

Es ist daher die Aufgabe der vorliegenden Erfindung, ein Schienenfahrzeugrad und Schienenfahrzeug der eingangs genannten Art so weiter zu bilden, dass die maximal zulässige Radsatzlast erhöht wird.

Die zuvor hergeleitete und aufgezeigte Aufgabe wird gemäß einer ersten Lehre der vorliegenden Erfindung bei einem Schienenfahrzeugrad, insbesondere Lokrad, mit einem eine Lauffläche und einen Spurkranz aufweisenden Radkranz, mit einer Radnabe und mit einem den Radkranz mit der Radnabe verbindenden Radsteg, wobei der Radsteg benachbart zum Radkranz eine Querschnittsreduzierung aufweist, die von mindestens einem um die Rotationsachse des Schienenfahrzeugrades umlaufenden ersten Einstich gebildet wird. Ferner betrifft die Erfindung ein Schienenfahrzeug mit einem solchen Schienenfahrzeugrad, dadurch gelöst, dass das Verhältnis der Dicke des nabenseitig zum ersten Einstich benachbarten Abschnitts des Radsteges zur Dicke des Abschnitts des Radsteges, in dem die Querschnittsreduzierung maximal ist, höchstens 1,20 beträgt. Mit anderen Worten ist erfindungsgemäß eine maximale Verringerung des Querschnitts von 20% vorgesehen.

Erfindungsgemäß ist erkannt worden, dass sich mit dem erfindungsgemäßen Schienenfahrzeugrad, insbesondere Vollrad, bei geeigneter Einstellung des Verhältnisses zwischen der Dicke des Radsteges im Bereich unmittelbar angrenzend an den jeweiligen Einstich zur Dicke im dünnsten Teil der Querschnittsreduzierung eine relativ hohe zulässige Radsatzlast und gleichzeitig eine äußerst kompakte (platzsparende) Bauweise erreichen lässt. Dabei wurde überraschenderweise festgestellt, dass ein Dickenverhältnis von 1,20 zwischen der Dicke des Radsteges unmittelbar neben der Querschnittsreduzierung und der Dicke im Maximum der Querschnittsreduzierung einen Wert darstellt, der nicht überschritten werden sollte, da oberhalb dieses Wertes die maximal zulässige Radsatzlast deutlich abnimmt. Insbesondere beträgt das Verhältnis der Dicke des nabenseitig zum ersten Einstich benachbarten Abschnitts des Radsteges zur Dicke des Abschnitts des Radsteges, in dem die Querschnittsreduzierung maximal ist, höchstens 1,15, bevorzugt höchstens 1,10, besonders bevorzugt höchstens 1,08. Danach beträgt also die maximal zulässige Verringerung des Querschnitts insbesondere 15%, bevorzugt 10% und besonders bevorzugt 8%.

Dabei hat sich herausgestellt, dass das Dickenverhältnis aber auch nicht beliebig klein sein darf, da ansonsten die freie Ausdehnbewegung einer benachbart zum Rad angeordneten Radbremsscheibe negativ beeinflusst wird oder, um dies zu vermeiden, der Abstand zwischen Rad und Radbremsscheibe vergrößert werden müsste, was ebenfalls nicht gewollt ist. Um bei möglichst kompakter Bauweise der Verbindungsanordnung aus Rad und Bremsscheibe dennoch eine ungehinderte Ausdehnung der Radbremsscheibe zu gewährleisten, sollte daher das zuvor genannte Dickenverhältnis einen Wert von 1,02, bevorzugt von 1,04, besonders bevorzugt von 1,06, nicht unterschreiten.

Es sei hervorgehoben, dass es sich bei dem erfindungsgemäßen Schienenfahrzeugrad vorzugsweise um ein Vollrad, auch Scheibenrad oder Monobloc-Rad genannt, handelt, die vorliegende Erfindung aber nicht auf ein solches Rad beschränkt ist. Insbesondere ist bei dem erfindungsgemäßen Schienenfahrzeugrad die vorderseitige (außenseitige) Oberfläche des Abschnitts des Radsteges, der unmittelbar benachbart zu dem jeweiligen Einstich ist, parallel zur Rotationsebene des Schienenfahrzeugrades. Dasselbe gilt insbesondere auch für die andere Seite (Rückseite, Innenseite) des Schienenfahrzeugrades, so dass idealerweise in dem Abschnitt benachbart zum Einstich die vorderseitige Oberfläche parallel zur rückseitigen Oberfläche verläuft. Mit vorderseitig (außenseitig) bzw. der Vorderseite (Außenseite) ist die vom Schienenfahrzeug wegweisende Seite und mit rückseitig (innenseitig) bzw. der Rückseite (Innenseite) die zur Schienenfahrzeugmitte weisende Seite des Schienenfahrzeugrades gemeint. Dabei kann der Radsteg, ausgehend von dem unmittelbar zum Einstich benachbarten Abschnitt in Richtung der Radnabe auch Abschnitte einer anderen Dicke und/oder eines anderen Oberflächenverlaufs haben. Grundsätzlich können in dem Radsteg außerdem auch Bohrungen und Vertiefungen vorgesehen sein.

Gemäß einer Ausgestaltung des erfindungsgemäßen Schienenfahrzeugrades wird die Querschnittsreduzierung nicht nur von einem ersten Einstich gebildet, sondern auf der gegenüberliegenden Radseite ist in diesem Fall ebenfalls ein umlaufender Einstich vorgesehen. Mit anderen Worten ist in diesem Fall erfindungsgemäß vorgesehen, dass die Querschnittsreduzierung ferner von einem zweiten um die Rotationsachse des Schienenfahrzeugrades umlaufenden Einstich gebildet wird, der dem ersten Einstich auf der anderen Seite des Schienenfahrzeugrades gegenüberliegt. Mit dem Begriff "gegenüberliegen" ist gemeint, dass zumindest ein Teil des ersten Einstichs in axialer Richtung, das heißt in Richtung der Rotationsachse, mit zumindest einem Teil des zweiten Einstichs überlappt. Dabei ist ein Einstich an der vom Schienenfahrzeug wegweisenden Radaußenseite und der andere Einstich an der zur Schienenfahrzeugmitte weisenden Radinnenseite vorgesehen.

Dabei ist es bevorzugt, wenn das nabenseitige Ende des ersten Einstichs und das nabenseitige Ende des zweiten Einstichs denselben Abstand von der Rotationsachse des Schienenfahrzeugrades haben. Mit dem nabenseitigen Ende des jeweiligen Einstichs ist die Kante zwischen der Oberfläche des nabenseitig zum jeweiligen Einstich benachbarten Abschnitts des Radsteges und dem Beginn der den Einstich bildenden umlaufenden Vertiefung gemeint.

Alternativ oder zusätzlich können auch das radkranzseitige Ende des ersten Einstichs und das radkranzseitige Ende des zweiten Einstichs denselben Abstand von der Rotationsachse des Schienenfahrzeugrades haben. Bevorzugt ist dabei eine exakt einander gegenüberliegende Anordnung des ersten Einstichs und zweiten Einstichs, bei der sich also sowohl das nabenseitige Ende des ersten Einstichs und das nabenseitige Ende des zweiten Einstichs als auch das radkranzseitige Ende des ersten Einstichs und das radkranzseitige Ende des zweiten Einstichs gegenüberliegen. Besonders bevorzugt ist dabei, wenn der erste Einstich und der zweite Einstich einen im Querschnitt zueinander spiegelsymmetrischen Verlauf bezogen auf eine zur Rotationsachse senkrechte Achse haben.

Mit dem radkranzseitigen Ende des jeweiligen Einstichs ist im Querschnitt der Punkt gemeint, in welchem sich die gedachte radkranzseitige Verlängerung der Oberfläche des nabenseitig zum ersten Einstich benachbarten Abschnitts des Radsteges mit der Oberfläche des Übergangsbereichs zwischen Radsteg und Radkranz schneidet. Bevorzugt ist dabei zwischen dem jeweiligen Einstich und der von der Lauffläche wegweisenden (nabenseitigen) Oberfläche des Radkranzes keine Kante ausgebildet, sondern der Einstich geht gleichmäßig in die Oberfläche des Radkranzes über. Mit anderen Worten ist im Querschnitt ein vom nabenseitigen Ende des Einstichs ausgehender gleichmäßiger, das heißt ohne Ausbildung von Kanten, Kurvenverlauf vorgesehen, der sich beim außenseitigen Einstich bis zur Radaußenseite bzw. beim innenseitigen Einstich bis zur Radinnenseite fortsetzt. Der Verlauf dieser Kurve kann durch verschiedene Radien oder aber durch auch nur einen einzigen Radius gebildet werden und auch gerade Teilabschnitte haben. Auf letztere kann auch verzichtet werden.

Gemäß noch einer weiteren Ausgestaltung des erfindungsgemäßen Schienenfahrzeugrades beträgt der Winkel α zwischen der Oberfläche des nabenseitig zum ersten Einstich benachbarten Abschnitts und der Kurventangenten am nabenseitigen Ende des ersten Einstichs, das heißt die Steigung des ersten Einstichs an seinem nabenseitigen Ende, höchstens 30°, bevorzugt höchstens 25°, besonders bevorzugt höchstens 20°. Grundsätzlich ist sogar ein Winkel von höchstens 18° denkbar. Dabei hat sich herausgestellt, dass eine möglichst geringe Steigung am nabenseitigen Ende des ersten Einstichs die Stabilität des Rades deutlich erhöht.

Zusätzlich oder alternativ kann aus dem zuvor genannten Grund auch der Winkel β zwischen der Oberfläche des nabenseitig zum zweiten Einstich benachbarten Abschnitts und der Kurventangenten am nabenseitigen Ende des zweiten Einstichs höchstens 30°, bevorzugt höchstens 25°, besonderes bevorzugt höchstens 20°, betragen. Auch hier kann durchaus auch ein Winkel von höchstens 18° vorgesehen sein. Besonders bevorzugt ist es dabei, wenn beide Winkel α und β gleich groß sind.

Gemäß wiederum einer weiteren Ausgestaltung des erfindungsgemäßen Schienenfahrzeugrads beträgt das Verhältnis des Abstands zwischen dem nabenseitigen Ende und dem radkranzseitigen Ende des ersten Einstichs zur Dicke des nabenseitig zum ersten und zweiten Einstich benachbarten Abschnitts des Radsteges höchstens 0,5, bevorzugt höchstens 0,45, besonders bevorzugt höchstens 0,4. Zusätzlich oder alternativ kann auch das Verhältnis des Abstands zwischen dem nabenseitigen Ende und dem radkranzseitigen Ende des zweiten Einstichs zur Dicke des nabenseitig zum ersten und zweiten Einstich benachbarten Abschnitts des Radsteges höchstens 0,5, bevorzugt höchstens 0,45, besonders bevorzugt höchstens 0,4, betragen. Es hat sich überraschend herausgestellt, dass der Abstand zwischen dem nabenseitigen Ende und dem radkranzseitigen Ende, also die Breite des jeweiligen Einstichs, nicht mehr als die Hälfte der Dicke des Radsteges unmittelbar benachbart zu dem Einstich betragen sollte. Idealerweise ist die Breite des jeweiligen Einstichs noch kleiner. Wird der genannte Wert überschritten, wird der Übergangsbereich zwischen Radsteg und Radkranz derart instabil, dass die maximal zulässige Radsatzlast erheblich sinkt.

Schließlich hat sich auch als vorteilhaft erwiesen, wenn das Verhältnis des Abstands zwischen dem nabenseitigen Ende und dem radkranzseitigen Ende des ersten und/oder zweiten Einstichs zur Dicke des Abschnitts des Radsteges, in dem die Querschnittsreduzierung maximal ist, höchstens 0,6, bevorzugt höchstens 0,5, besonders bevorzugt höchstens 0,45, beträgt. So hat sich auch das Verhältnis zwischen der Breite des jeweiligen Einstichs und der Dicke des Radsteges im dünnsten Bereich der Querschnittsreduzierung als ein Parameter herausgestellt, der die zulässige Radsatzlast des Schienenfahrzeugrads mit beeinflusst.

Die hergeleitete und aufgezeigte Aufgabe wird ferner gemäß einer zweiten Lehre der vorliegenden Erfindung durch ein Schienenfahrzeug, insbesondere eine Lokomotive, einen Triebwagen oder einen Reisezugwagen, mit einem Schienenfahrzeugrad, wie es zuvor beschrieben wurde, gelöst.

Es gibt nun eine Vielzahl von Möglichkeiten, das erfindungsgemäße Schienenfahrzeugrad und das erfindungsgemäße Schienenfahrzeug auszugestalten und weiterzubilden. Hierzu wird einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: eine Querschnittsansicht der unteren Hälfte eines Schienenfahrzeugrads gemäß der vorliegenden Erfindung,
- Fig. 2: einen vergrößerten Ausschnitt aus Fig. 1 und
- Fig. 3: einen vergrößerten Ausschnitt aus Fig. 2.

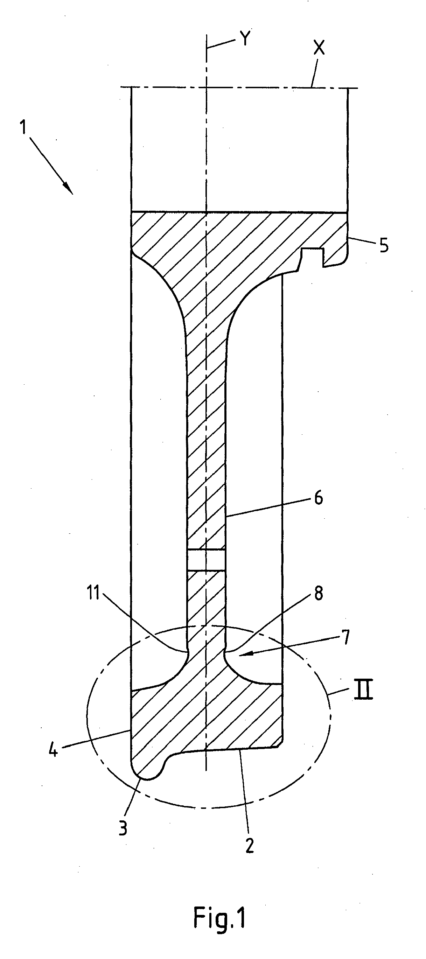

In Fig. 1 ist ein Schienenfahrzeugrad 1, hier ein Lokrad, im Schnitt dargestellt, und zwar im Bereich von der Rotationsachse X bis zur Unterseite des Radkranzes 4, mit dem das Schienenfahrzeugrad 1 im Betrieb des Schienenfahrzeugs (nicht dargestellt) die Schiene berührt.

Das erfindungsgemäße, in Fig. 1 gezeigte Schienenfahrzeugrad 1 weist einen Radkranz 4 auf, der mit besagter Lauffläche 2 und einem Spurkranz 3 versehen ist. Ferner weist das Schienenfahrzeugrad 1 eine Radnabe 5 zur Verbindung des Rades 1 mit einer Fahrzeugachse (nicht dargestellt) und einen Radsteg 6 auf, der den Radkranz 4 mit der Radnabe 5 verbindet. Der Radsteg 6 weist dabei benachbart zum Radkranz 4 eine Querschnittsreduzierung 7 auf, die von zwei einander gegenüberliegenden Einstichen 8 und 11 gebildet wird.

Sowohl bei dem ersten Einstich 8 als auch bei dem zweiten Einstich 11 handelt es sich um eine um die Rotationsachse X des Schienenfahrzeugrades 1 umlaufende Vertiefung in der ansonsten senkrecht zur Rotationsachse verlaufenden Oberfläche des Radsteges 6. Die durch den jeweiligen Einstich 8 bzw. 11 gebildete Vertiefung bzw. der dadurch gebildete Hinterschnitt hat einen kurvenförmigen Verlauf, der in die rückwärtige, das heißt von der Lauffläche 2 wegweisende Oberfläche des Radkranzes gleichmäßig übergeht. Der kurvenförmige Verlauf beider Einstiche 8 und 11 weist keine geraden Teilabschnitte auf.

Im dargestellten Ausführungsbeispiel handelt es sich bei dem Schienenfahrzeugrad 1 um ein Vollrad aus Stahl.

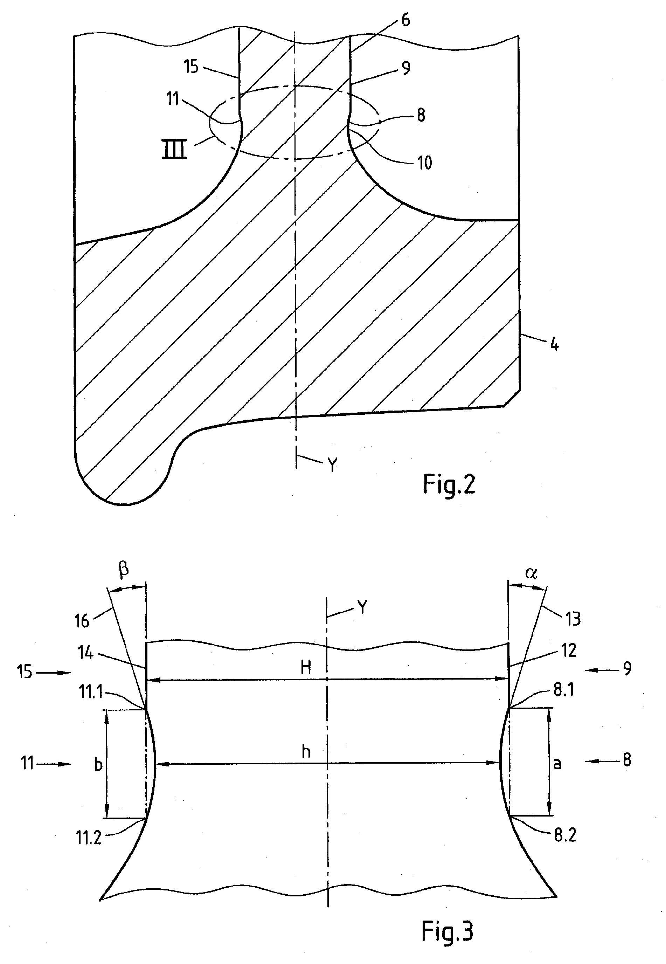

Das Detail II aus Fig. 1 ist in Fig. 2 vergrößert dargestellt. Fig. 3 zeigt eine Vergrößerung des Details III aus Fig. 2.

Wie in den Figuren 2 und 3 zu erkennen ist, liegt dem ersten Einstich 8 in Verlaufsrichtung der Rotationsachse X besagter zweiter Einstich 11 exakt gegenüber. Mit anderen Worten haben zum einen das nabenseitige Ende 8.1 des ersten Einstichs 8 und das nabenseitige Ende 11.1 des zweiten Einstichs 11 denselben Abstand von der Rotationsachse X des Schienenfahrzeugrades 1. Zum anderen haben aber auch das radkranzseitige Ende 8.2 des ersten Einstichs 8 und das radkranzseitige Ende 11.2 des zweiten Einstichs 11 denselben Abstand von der Rotationsachse X. Dabei haben, was Fig. 3 besonders anschaulich zeigt, der erste Einstich 8 und der zweite Einstich 11 einen im Querschnitt zueinander spiegelsymmetrischen Verlauf, und zwar bezogen auf die zur Rotationsachse X senkrechte Achse Y.

Wie ebenfalls Fig. 3 besonders gut erkennen lässt, beträgt das Verhältnis der Dicke H des nabenseitig zum ersten Einstich 8 benachbarten Abschnitts 9 des Radsteges 6 zur Dicke h des Abschnitts 10 des Radsteges 6, in dem die Querschnittsreduzierung 7 maximal ist, höchstens 1,20, im vorliegenden Fall 1,06. Auf diese Weise wird erreicht, dass die Stabilität im Bereich der Querschnittsreduzierung 7 gegenüber dem Stand der Technik deutlich erhöht wird. Andererseits ist dabei aber auch gleichzeitig weiterhin eine optimale Bewegungsfreiheit einer mit dem Schienenfahrzeugrad 1 verbundenen Radbremsscheibe (nicht dargestellt) bei einem gleichzeitig sehr geringen Abstand zwischen Bremsscheibe und Rad 1 gewährleistet.

Um diesen sich auf die Stabilität des Schienenfahrzeugrades 1 positiv auswirkenden Effekt noch zu verstärken, ist bei dem dargestellten Ausführungsbeispiel ferner der Winkel α zwischen der Oberfläche 12 des nabenseitig zum ersten Einstich 8 benachbarten Abschnitts 9 und der Kurventangenten 13 am nabenseitigen Ende 8.1 des ersten Einstichs 8 so gewählt, dass dieser höchstens 30° beträgt. Im vorliegenden Fall beträgt der Winkel beispielhaft 16°. Entsprechendes gilt auch für den Winkel β zwischen der Oberfläche 14 des nabenseitig zum zweiten Einstich 11 benachbarten Abschnitts 15 und der Kurventangenten 16 am nabenseitigen Ende 11.1 des zweiten Einstichs 11, der ebenfalls höchstens 30° beträgt und in dem dargestellten Ausführungsbeispiel 16° beträgt.

Ein weiterer Parameter, der Einfluss auf die Stabilität des Schienenfahrzeugrades 1 und damit die maximal zulässige Radsatzlast hat, ist das Verhältnis des Abstands a zwischen dem nabenseitigen Ende 8.1 und dem radkranzseitigen Ende 8.2 des ersten Einstichs 8 zur Dicke H des nabenseitig zum ersten und zweiten Einstich 8, 11 benachbarten Abschnitts 9, 15 des Radsteges 6, das höchstens 0,5 beträgt. Entsprechendes gilt auch für das Verhältnis des Abstands b zwischen dem nabenseitigen Ende 11.1 und dem radkranzseitigen Ende 11.2 des zweiten Einstichs 11 zur Dicke H, das ebenfalls höchstens 0,5 beträgt. Im vorliegenden Fall beträgt sowohl das Verhältnis a/H als auch das Verhältnis b/H jeweils 0,30.

Schließlich ist vorgesehen, dass das Verhältnis des Abstands a bzw. b zwischen dem nabenseitigen Ende 8.1 bzw. 11.1 und dem radkranzseitigen Ende 8.2 bzw. 11.2 des ersten und/oder zweiten Einstichs 8 bzw. 11 zur Dicke h des Abschnitts 10 des Radsteges 6, in dem die Querschnittsreduzierung 7 maximal ist, höchstens 0,6 beträgt. Im konkreten Fall beträgt das Verhältnis a/h sowie das Verhältnis b/h jeweils 0,31.

## Patentansprüche

1. Schienenfahrzeugrad (1), insbesondere Lokrad,
- mit einem eine Lauffläche (2) und einen Spurkranz (3) aufweisenden Radkranz (4),
- mit einer Radnabe (5) und
- mit einem den Radkranz (4) mit der Radnabe (5) verbindenden Radsteg (6), wobei der Radsteg (6) benachbart zum Radkranz (4) eine Querschnittsreduzierung (7) aufweist, die von mindestens einem um die Rotationsachse (X) des Schienenfahrzeugrades (1) umlaufenden ersten Einstich (8) gebildet wird,
**dadurch gekennzeichnet, dass** das Verhältnis der Dicke (H) des nabenseitig zum ersten Einstich (8) benachbarten Abschnitts (9) des Radsteges (6) zur Dicke (h) des Abschnitts (10) des Radsteges (6), in dem die Querschnittsreduzierung (7) maximal ist, höchstens 1,20 beträgt.

2. Schienenfahrzeugrad (1) nach Anspruch 1, **dadurch gekennzeichnet, dass** die Querschnittsreduzierung (7) ferner von einem zweiten um die Rotationsachse (X) des Schienenfahrzeugrades (1) umlaufenden Einstich (11) gebildet wird, der dem ersten Einstich (8) auf der anderen Seite des Schienenfahrzeugrades (1) gegenüberliegt.

3. Schienenfahrzeugrad (1) nach Anspruch 2, **dadurch gekennzeichnet, dass** das nabenseitige Ende (8.1) des ersten Einstichs (8) und das nabenseitige Ende (11.1) des zweiten Einstichs (11) denselben Abstand von der Rotationsachse (X) des Schienenfahrzeugrades (1) haben.

4. Schienenfahrzeugrad (1) nach Anspruch 2 oder 3, **dadurch gekennzeichnet, dass** das radkranzseitige Ende (8.2) des ersten Einstichs (8) und das radkranzseitige Ende (11.2) des zweiten Einstichs (11) denselben Abstand von der Rotationsachse (X) des Schienenfahrzeugrades (1) haben.

5. Schienenfahrzeugrad (1) nach Anspruch 4, **dadurch gekennzeichnet, dass** der erste Einstich (8) und der zweite Einstich (11) einen im Querschnitt zueinander spiegelsymmetrischen Verlauf bezogen auf eine zur Rotationsachse (X) senkrechte Achse (Y) haben.

6. Schienenfahrzeugrad (1) nach einem der vorangehenden Ansprüche, **dadurch gekennzeichnet, dass** das Verhältnis der Dicke (H) des nabenseitig zum ersten Einstich (8) benachbarten Abschnitts (9) des Radsteges (6) zur Dicke (h) des Abschnitts (10) des Radsteges (6), in dem die Querschnittsreduzierung (7) maximal ist, höchstens 1,15, bevorzugt höchstens 1,10, besonders bevorzugt höchstens 1,08, und insbesondere mindestens 1,02, bevorzugt mindestens 1,04, besonders bevorzugt mindestens 1,06, beträgt.

7. Schienenfahrzeugrad (1) nach einem der vorangehenden Ansprüche, **dadurch gekennzeichnet, dass** der Winkel α zwischen der Oberfläche (12) des nabenseitig zum ersten Einstich (8) benachbarten Abschnitts (9) und der Kurventangenten (13) am nabenseitigen Ende (8.1) des ersten Einstichs (8) höchstens 30°, bevorzugt höchstens 25°, besonders bevorzugt höchstens 20°, beträgt.

8. Schienenfahrzeugrad (1) nach einem der vorangehenden Ansprüche, **dadurch gekennzeichnet, dass** der Winkel β zwischen der Oberfläche (14) des nabenseitig zum zweiten Einstich (11) benachbarten Abschnitts (15) und der Kurventangenten (16) am nabenseitigen Ende (11.1) des zweiten Einstichs (11) höchstens 30°, bevorzugt höchstens 25°, besonders bevorzugt höchstens 20°, beträgt.

9. Schienenfahrzeugrad (1) nach einem der vorangehenden Ansprüche, **dadurch gekennzeichnet, dass** das Verhältnis des Abstands (a;b) zwischen dem nabenseitigen Ende (8.1;11.1) und dem radkranzseitigen Ende (8.2;11.2) des ersten und/oder zweiten Einstichs (8;11) zur Dicke (H) des nabenseitig zum ersten und zweiten Einstich (8,11) benachbarten Abschnitts (9,15) des Radsteges (6) höchstens 0,5, bevorzugt höchstens 0,45, besonders bevorzugt höchstens 0,4, beträgt.

10. Schienenfahrzeugrad (1) nach einem der vorangehenden Ansprüche, **dadurch gekennzeichnet, dass** das Verhältnis des Abstands (a;b) zwischen dem nabenseitigen Ende (8.1;11.1) und dem radkranzseitigen Ende (8.2;11.2) des ersten und/oder zweiten Einstichs (8;11) zur Dicke (h) des Abschnitts (10) des Radsteges (6), in dem die Querschnittsreduzierung (7) maximal ist, höchstens 0,6, bevorzugt höchstens 0,5, besonders bevorzugt höchstens 0,45, beträgt.

11. Schienenfahrzeug mit einem Schienenfahrzeugrad (1) nach einem der vorangehenden Ansprüche.

## Claims

1. A rail vehicle wheel (1), particularly a locomotive wheel,
- with a wheel rim (4) that features a running tread (2) and a wheel flange (3),
- with a wheel hub (5), and
- with a wheel web (6) that connects the wheel rim (4) to the wheel hub (5), wherein the wheel web (6) features adjacent to the wheel rim (4) a reduction of cross-sectional area (7) that is formed by at least one first recess (8) extending around the rotational axis (X) of the rail vehicle wheel (1),
**characterized in that** the ratio of the thickness (H) of the section (9) of the wheel web (6) situated adjacent to the first recess (8) on the wheel hub side to the thickness (h) of the section (10) of the wheel web (6), in which the reduction of cross-sectional area (7) is at its maximum, amounts to no more than 1,20.

2. The rail vehicle wheel (1) according to claim 1, **characterized in that** the reduction of cross-sectional area (7) is furthermore formed by a second recess (11) that extends around the rotational axis (X) of the rail vehicle wheel (1) and lies opposite of the first recess (8) on the other side of the rail vehicle wheel (1).

3. The rail vehicle wheel (1) according to claim 2, **characterized in that** the end (8.1) of the first recess (8) on the wheel hub side and the end (11.1) of the second recess (11) on the wheel hub side are equidistantly spaced apart from the rotational axis (X) of the rail vehicle wheel (1).

4. The rail vehicle wheel (1) according to claim 2 or 3, **characterized in that** the end (8.2) of the first recess (8) on the wheel rim side and the end (11.2) of the second recess (11) on the wheel rim side are equidistantly spaced apart from the rotational axis (X) of the rail vehicle wheel (1).

5. The rail vehicle wheel (1) according to claim 4, **characterized in that** the first recess (8) and the second recess (11) extend in a cross-sectionally mirror-symmetric fashion to one another referred to an axis (Y) extending perpendicular to the rotational axis (X).

6. The rail vehicle wheel (1) according to one of the preceding claims, **characterized in that** the ratio of the thickness (H) of the section (9) of the wheel web (6) situated adjacent to the first recess (8) on the wheel hub side to the thickness (h) of the section (10) of the wheel web (6), in which the reduction of cross-sectional area (7) is at its maximum, amounts to no more than 1,15, preferably no more than 1,10, more preferably no more than 1,08, and particularly no less than 1,02, preferably no less than 1,04, more preferably no less than 1,06.

7. The rail vehicle wheel (1) according to one of the preceding claims, **characterized in that** the angle α between the surface (12) of the section (9) situated adjacent to the first recess (8) on the wheel hub side and the curvature tangents (13) on the end (8.1) of the first recess (8) on the wheel hub side amounts to no more than 30°, preferably no more than 25°, more preferably no more than 20°.

8. The rail vehicle wheel (1) according to one of the preceding claims, **characterized in that** the angle β between the surface (14) of the section (15) situated adjacent to the second recess (11) on the wheel hub side and the curvature tangents (16) on the end (11.1) of the second recess (11) on the wheel hub side amounts to no more than 30°, preferably no more than 25°, more preferably no more than 20°.

9. The rail vehicle wheel (1) according to one of the preceding claims, **characterized in that** the ratio of the distance (a; b) between the end (8.1; 11.1) of the first and/or second recess (8; 11) on the wheel hub side and the end (8.2; 11.2) of the first and/or second recess on the wheel rim side to the thickness (H) of the section (9, 15) of the wheel web (6) situated adjacent to the first and the second recess (8, 11) on the wheel hub side amounts to no more than 0,5, preferably no more than 0,45, more preferably no more than 0,4.

10. The rail vehicle wheel (1) according to one of the preceding claims, **characterized in that** the ratio of the distance (a; b) between the end (8.1; 11.1) of the first and/or second recess (8; 11) on the wheel hub side and the end (8.2; 11.2) of the first and/or second recess on the wheel rim side to the thickness (h) of the section (10) of the wheel web (6), in which the reduction of cross-sectional area (7) is at its maximum, amounts to no more than 0,6, preferably no more than 0,5, more preferably no more than 0,45.

11. A rail vehicle with a rail vehicle wheel (1) according to one of the preceding claims.

## Revendications

1. Roue de véhicule sur rails (1), en particulier roue de locomotive, comportant
- une surface de roulement (2) et une jante (4) pourvue d'un boudin (3),
- un moyeu de roue (5) et
- une traverse de roue (6) reliant le boudin (4) au moyeu de roue (5), la traverse de roue (6) présentant à proximité du boudin (4) une réduction de section transversale (7) qui est pratiquée grâce à au moins une première piqûre (8) cernant l'axe de rotation (X) de la roue de véhicule sur rails (1),
**caractérisée en ce que** le rapport entre l'épaisseur (H) de la section (9) de la traverse de roue (6) voisine de la première piqûre (8) au niveau du moyeu et l'épaisseur (h) de la section (10) de la traverse de roue (6) dans laquelle la réduction de section transversale (7) est maximale est de 1,20 au plus.

2. Roue de véhicule sur rails (1) selon la revendication 1, **caractérisée en ce que** la réduction de section transversale (7) est formée par une seconde piqûre (11) cernant l'axe de rotation (X) de la roue de véhicule sur rails (1) et qui est opposée à la première piqûre (8) de l'autre côté de la roue de véhicule sur rails (1).

3. Roue de véhicule sur rails (1) selon la revendication 2, **caractérisée en ce que** l'extrémité (8.1) de la première piqûre (8) située au niveau du moyeu et l'extrémité (11.1) de la seconde piqûre (11) située au niveau du moyeu sont à la même distance de l'axe de rotation (X) de la roue de véhicule sur rails (1).

4. Roue de véhicule sur rails (1) selon la revendication 2 ou 3, **caractérisée en ce que** l'extrémité (8.2) de la première piqûre (8) située au niveau de la jante et l'extrémité (11.2) de la seconde piqûre (11) située au niveau de la jante sont à la même distance de l'axe de rotation (X) de la roue de véhicule sur rails (1).

5. Roue de véhicule sur rails (1) selon la revendication 4, **caractérisée en ce que** la première piqûre (8) et la seconde piqûre (11) ont une extension symétrique en miroir l'une par rapport à l'autre par rapport à un axe (Y) perpendiculaire à l'axe de rotation (X).

6. Roue de véhicule sur rails (1) selon une des revendications précédentes, **caractérisée en ce que** le rapport entre l'épaisseur (H) de la section (9) de la traverse de roue (6) voisine de la première piqûre (8) au niveau du moyeu et l'épaisseur (h) de la section (10) de la traverse de roue (6) dans laquelle la réduction de section transversale (7) est maximale est de 1,15 au plus, de préférence 1,10 au plus, de manière particulièrement préférentielle de 1,08 au plus, et en particulier d'au moins 1,02, de préférence au moins 1,04, de manière particulièrement préférentielle d'au moins 1,06.

7. Roue de véhicule sur rails (1) selon une des revendications précédentes, **caractérisée en ce que** l'angle α entre la surface (12) de la section (9) voisine de la première piqûre (8) au niveau du moyeu et la tangente de courbe (13) à l'extrémité (8.1) de la première piqûre (8) située au niveau du moyeu est de 30° au plus, de préférence 25° au plus, de manière particulièrement préférentielle de 20° au plus.

8. Roue de véhicule sur rails (1) selon une des revendications précédentes, **caractérisée en ce que** l'angle β entre la surface (14) de la section (15) voisine de la seconde piqûre (11) au niveau du moyeu et la tangente de courbe (16) à l'extrémité (11.1) de la seconde piqûre (11) située au niveau du moyeu est de 30° au plus, de préférence 25° au plus, de manière particulièrement préférentielle de 20° au plus.

9. Roue de véhicule sur rails (1) selon une des revendications précédentes, **caractérisée en ce que** le rapport entre la distance (a ; b) entre l'extrémité (8.1 ; 11.1) située au niveau du moyeu et l'extrémité (8.2 ; 11.2) située au niveau du boudin de la première et/ou de la seconde piqûre (8 ; 11) et l'épaisseur (H) de la section (9, 15) de la traverse de roue (6) voisine au niveau du moyeu de la première et seconde piqûres (8, 11) est de 0,5 au plus, de préférence 0,45 au plus, de manière particulièrement préférentielle de 0,4 au plus.

10. Roue de véhicule sur rails (1) selon une des revendications précédentes, **caractérisée en ce que** le rapport entre la distance (a ; b) entre l'extrémité (8.1 ; 11.1) située au niveau du moyeu et l'extrémité (8.2 ; 11.2) située au niveau du boudin de la première et/ou de la seconde piqûre (8 ; 11) et l'épaisseur (h) de la section (10) de la traverse de roue (6) dans laquelle la réduction de section transversale (7) est maximale est de 0,6 au plus, de préférence 0,5 au plus, de manière particulièrement préférentielle de 0,45 au plus.

11. Véhicule sur rails comportant une roue de véhicule sur rails (1) selon une des revendications précédentes.
